# EUROPÄISCHE PATENTANMELDUNG

(11) **EP 0 693 525 A2**
(43) Veröffentlichungstag der Anmeldung: **24.01.1996**
(21) Anmeldenummer: 95110231.8
(22) Anmeldetag: 30.06.1995
(51) Int. Cl.: C08J 9/00

(54) **Verfahren zur Herstellung biologisch abbaubarer, duroplastischer Schaumstoffe**

(30) Priorität: 19.07.1994 DE 4425442
(71) Anmelder: HÜLS AKTIENGESELLSCHAFT, D-45764 Marl (DE)
(72) Erfinder: Mirgel, Ralf, Dr., D-53332 Bornheim (DE); Wottawa, Johannes, D-51109 Köln (DE); Zagefka, Hans-Dieter, Dr., D-45721 Haltern (DE); Goergen, Richard, D-53809 Ruppichteroth (DE)

(57) **Zusammenfassung**

Bei einem Verfahren zur Herstellung biologisch abbaubarer, duroplastischer Schaumstoffe werden biologisch abbaubare Substanzen als Komponenten der Verschäumungsrezeptur eingesetzt, z.B. Holzmehl, Holzfasern, Torf, Alkylcellulose, Mono-, Oligo- oder Polysaccharide. Vorzugsweise wird bei der Schaumstoffherstellung als Hauptbestandteil ein Phenol-Resol verwendet.

## Beschreibung

Die Erfindung betrifft ein Verfahren zur Herstellung biologisch abbaubarer, duroplastischer Schaumstoffe.

Es ist bekannt, ausgehärtete Phenolharze aufgrund ihrer guten Beständigkeit gegenüber erhöhten Temperaturen, Chemikalien oder Bakterien in den verschiedensten Anwendungsgebieten einzusetzen (Knop, Pilato: "Phenolic resins", Springer-Verlag, Berlin, 1985). Die Forderung nach biologisch abbaubaren Kunststoffen wird jedoch inzwischen immer häufiger.

Aus der deutschen Patentanmeldung P 4323232.9 ist bekannt, modifizierte Phenolresole herzustellen und diese zu biologisch abbaubaren Schaumstoffen zu verarbeiten. Die Herstellung qualitativ guter Schaumstoffe, z.B. Blumensteckschaum, war jedoch nur durch wesentliche Änderung der Harzrezeptur möglich. Des weiteren wird die Aushärtungszeit aufgrund der starken Modifizierung der Harze verlängert.

Es bestand daher das Problem, biologisch abbaubare, duroplastische Schaumstoffe ohne die erwähnten Nachteile herzustellen.

Das Problem wurde durch den Einsatz biologisch abbaubarer Substanzen als Komponenten der Verschäumungsrezeptur gelöst. Hierbei setzt man eine biologisch abbaubare Substanz oder mehrere biologisch abbaubare Substanzen aus der Gruppe Holzmehl, Holzfasern, Torf, Alkylcellulose, Mono-, Oligo- oder Polysaccharide zu den Komponenten der Verschäumungsrezeptur, die nichtmodifizierte Schaumharze umfaßt, zu. Vorzugsweise wird als Hauptbestandteil der Verschäumungsrezeptur ein Phenol-Resol eingesetzt.

Erfindungsgemäß ist es überraschend möglich, die biologisch abbaubaren Komponenten in einem Anteil von bis zu 30 Gew.-%, bezogen auf das Harz, als Additiv dem Harz zuzugeben, ohne daß die Verschäumung bzw. die Eigenschaften des Schaumstoffes, wie Druckfestigkeit, Struktur und Wasseraufnahmevermögen bzw. -geschwindigkeit, negativ beeinflußt werden. So hergestellte Schaumstoffe verrotten bei Feuchtigkeit und Zutritt von Mikroorganismen.

Die Verarbeitung von Phenolresolharzen zu Schaumstoffen, die als Steckschäume für Schnittblumen oder als Substratmaterial für die erdelose Kultivierung von Zier- und Nutzpflanzen eingesetzt werden, ist bekannt. Im allgemeinen verfährt an dabei so, daß ein wäßriges Phenolharz mit einem Tensid-Gemisch, in der Regel einer Mischung aus nicht-ionischen und anionischen Tensiden, einem Treibmittel, z.B. niedrigsiedenden Kohlenwasserstoffen, und eine: Härter, z.B. organischen Sulfonsäuren, vermischt wird. Die so hergestellte, schäumfähige Mischung wird in eine auf 40 bis 60 °C beheizbare Form gegeben, wo sie aufschäumt und aushärtet.

So hergestellte Schaumstoffe liegen in einem Dichtebereich von 15 bis 35 kg/m³, besitzen ein Wasseraufnahmevermögen von mehr als 80 Vol.-%, eine hohe Wasseraufnahmegeschwindigkeit und ein gutes Retentionsvermögen für aufgenommenes Wasser.

Um die Schaumstoffe für Mikroorganismen angreifbar zu machen, werden gemäß der Erfindung bis zu 30 Gew.-%, bezogen auf das Harz, der erfindungsgemäß zuzusetzenden Substanzen eingemischt. Wichtig ist, daß diese Zuschlagstoffe unbehandelt sind. d.h. z.B. keine Bindemittel, Fungizide, Insektizide, Bakterizide oder ähnlich wirkende Substanzen enthalten. Durch Erhöhung des Treibmittelanteils kann der gleiche Dichtebereich wie bei ungefüllten Schaumstoffen eingestellt werden.

Die Herstellung eines homogenen, schäumfähigen Gemisches ist erfahrungsgemäß um so schwieriger, je höher der Anteil des festen Zuschlagstoffes gewählt wird. Diese Schwierigkeit kann durch Verwendung eines Doppelschneckenextruders überwunden werden.

Eine typische Verschäumungsrezeptur ist wie folgt:
100 Gew.-Teile Phenolharz
2 - 8 Gew.-Teile Tensidgemisch
5 - 10 Gew.-Teile Treibmittel
5 - 15 Gew.-Teile Härter
0,5 - 2 Gew.-Teile Farbstoff
1 - 30 Gew.-Teile biologisch abbaubarer Zuschlagstoff
Zur Überprüfung der biologischen Abbaubarkeit der beschriebenen Schaumstoffe wurden Versuchsreihen im Institut für Gemüsebau der Technischen Universität Hannover durchgeführt. Der Schaumstoff wurde im Volumen-Verhältnis 1 : 1 mit Kompost gemischt, die Mischungen wurden in Glasgefäße eingebracht und die jeweilige 24stündige CO₂-Produktion wurde als Maß für die Abbaubarkeit in bis zu dreiwöchigen Abständen gemessen.

Die gemessenen CO₂-Werte lagen von Anfang an weit über denen, die den Mischungsverhältnis Kompost zu Schaumstoff entsprechen, was auf einen Abbau der im duroplastischen Gerüst eingebauten Zuschlagstoffe und eine damit verbundene Auflösung der Schaumstruktur hindeutet. Die Serie wurde nach 4 Monaten beendet. Bei Schäumen, die keine Zuschlagstoffe enthielten, war eine Zersetzung durch Mikroorganismen selbst nach einer 6monatigen Kompostierung nicht erkennbar.

### Beispiel 1:

100 Gew.-Teile DYNAPOR-Schaumharz 1051 werden mit 5,1 Gew.-Teilen DYNAPOR-Additiv 8020, 1,7 Gew.-Teilen DYNAPOR-Additiv 8003, 1 Gew.-Teil Farbstoff auf Basis eines Triarylmethan-Derivats, 7 Gew.-Teilen eines Pentan/Hexan-Gemisches und 15 Gew.-Teilen Reisstärke versetzt und mittels eines Propellerrührers 60 Sekunden lang intensiv vermischt. Anschließend werden 15 Gew.-Teile des DYNAPOR-Härters 7000 zugegeben, danach wird weitere 30 Sekunden gerührt. Der Schaumstoff weist folgende Kenndaten auf: Dichte 29 kg/m³, Wasseraufnahmegeschwindigkeit (Ziegel) 105 Sekunden, Wasseraufnahme (Ziegel) 1870 g, negative Retention 25 g.

### Beispiel 2:

100 Gew.-Teile DYNAPOR-Schaumharz 1051 werden mit 5,5 Gew.-Teilen DYNAPOR-Additiv 8020, 1,9 Gew.-Teilen DYNAPOR-Additiv 8003, 1 Gew.-Teil Farbstoff auf Basis eines Triarylmethan-Derivats, 5 Gew.-Teilen eines Pentan/Hexan-Gemisches und 3 Gew.-Teilen Holzfaserschliff versetzt und mittels eines Propellerrührers 60 Sekunden lang intensiv vermischt. Anschließend werden 17 Gew.-Teile des DYNAPOR-Härters 7000 zugegeben, danach wird weitere 30 Sekunden gerührt. Der Schaumstoff weist folgende Kenndaten auf: Dichte 32 kg/m³, Wasseraufnahmegeschwindigkeit (Ziegel) 125 Sekunden, Wasseraufnahme (Ziegel) 1820 g, negative Retention 45 g.

### Beispiel 3:

100 Gew.-Teile DYNAPOR-Schaumharz 1051 werden mit 5,7 Gew.-Teilen DYNAPOR-Additiv 8020, 2,1 Gew.-Teilen DYNAPOR-Additiv 8003, 1 Gew.-Teil Farbstoff auf Basis eines Triarylmethan-Derivats, 8 Gew.-Teilen eines Pentan/Hexan-Gemisches und 20 Gew.-Teilen Methylzellulose versetzt und mittels eines Propellerrührers 60 Sekunden lang intensiv vermischt. Anschließend werden 15 Gew.-Teile des DYNAPOR-Härters 7000 zugegeben, danach wird weitere 30 Sekunden gerührt. Der Schaumstoff weist folgende Kenndaten auf: Dichte 30 kg/m³, Wasseraufnahmegeschwindigkeit (Ziegel) 90 Sekunden, Wasseraufnahme (Ziegel) 1780 g, negative Retention 50 g.

### Beispiel 4:

100 Gew.-Teile DYNAPOR-Schaumharz 1051, 5,9 Gew.-Teile DYNAPOR-Additiv 8020, 1,7 Gew.-Teile DYNAPOR-Additiv 8003, 1 Gew.-Teil Farbstoff auf Basis eines Triarylmethan-Derivates, 12 Gew.-Teile eines Pentan/Hexan-Gemisches und 30 Gew.-Teile Holzmehl werden über einen Doppelschneckenextruder - der Zuschlagstoff wird über eine kleine Doppelschnecke gravimetrisch eindosiert - homogen vermischt. Der Schaumstoff weist folgende Kenndaten auf: Dichte 28 kg/m³, Wasseraufnahmegeschwindigkeit (Ziegel) 95 Sekunden, Wasseraufnahme (Ziegel) 1850 g, negative Retention 30 g.

## Patentansprüche

1. Verfahren zur Herstellung biologisch abbaubarer, duroplastischer Schaumstoffe, dadurch gekennzeichnet, daß an biologisch abbaubare Substanzen als Komponenten der Verschäumungsrezeptur einsetzt.

2. Verfahren nach Anspruch 1, dadurch gekennzeichnet, daß man eine biologisch abbaubare Substanz oder mehrere biologisch abbaubare Substanzen aus der Gruppe Holzmehl, Holzfasern, Torf, Alkylcellulose, Mono-, Oligo- oder Polysaccharide einsetzt.

3. Verfahren nach Anspruch 1, dadurch gekennzeichnet, daß an als Hauptbestandteil ein Phenol-Resol einsetzt.

4. Verfahren nach Anspruch 1 oder 2, dadurch gekennzeichnet, daß der Anteil der biologisch abbaubaren Komponenten bis zu 30 Gew.-%, bezogen auf das Harz, beträgt.

5. Duroplastischer, biologisch abbaubarer Schaumstoff, hergestellt nach einem der Ansprüche 1 bis 4.

6. Duroplastischer, biologisch abbaubarer Schaumstoff nach Anspruch 5, hergestellt unter Verwendung eines Doppelschneckenextruders.
